# DEMANDE DE BREVET EUROPEEN

(11) **EP 3 173 968 A1**
(43) Date de publication de la demande: **31.05.2017**
(21) Numéro de dépôt: 15306874.7
(22) Date de dépôt: 26.11.2015
(51) Int. Cl.: G06K 7/10

(54) **PROCEDE DE DETECTION DE PRESENCE DE TRANSPONDEUR RADIOFREQUENCE PAR SIMULATION DE COUPLAGE ELECTROMAGNETIQUE**

(71) Demandeur: GEMALTO SA, 92190 Meudon (FR)
(72) Inventeur: CARUANA, Jean-Paul, 13881 Gemenos Cedex (FR); CAPOMAGGIO, Grégory, 13881 Gemenos Cedex (FR); BUTON, Christophe, 13881 Gemenos Cedex (FR)
(74) Mandataire: Milharo, Emilien

(57) **Abrégé**

L'invention concerne un procédé pour une détection de présence d'un transpondeur radiofréquence (16) d'un objet (11) par un lecteur radiofréquence (1), ledit procédé comprenant une étape (100) d'émission d'un signal (RF1) comprenant un champ électromagnétique (RF1), par le lecteur (1) et une étape de détection (400) par le lecteur d'une valeur représentative (dt2-T1, dVRF1) de la présence du transpondeur (11) en réponse à ce champ (TR2) ;

Le procédé se distingue en ce qu'il comprend une étape d'émission d'un signal (RF2) comprenant un champ électromagnétique (TR3) par ledit transpondeur radiofréquence (16) en réponse à ladite émission préalable (RF1).

L'invention concerne également un système (Z), circuit (16, 20) et objet (11) correspondants.

## Description

### Domaine de l'invention.

L'invention concerne un procédé de détection de présence, à proximité, d'un transpondeur radiofréquence par un lecteur radiofréquence. Elle concerne également un procédé de communication radiofréquence entre un lecteur et un transpondeur radiofréquence ainsi que des systèmes et circuits configurés à cet effet, mettant en oeuvre ce procédé de détection.

La communication radiofréquence (RF) est en principe une communication de proximité et est effectuée par couplage et induction électromagnétique d'une portée de l'ordre de 0 m à environ 1 m voire quelques mètres. Toutefois, l'invention vise, de préférence, les communications radiofréquences dont la portée est de 0 à 10 cm dans le cadre de la technologie de proximité (proximity) selon la norme ISO 14443 ;

Les circuits et dispositif visés par l'invention peuvent être compris dans des objets portables électroniques par exemple des cartes à mémoire telles que de type SD (de la société Sandisk). De telles cartes sont actuellement utilisées dans une interface carte de téléphones portables pour effectuer une transaction de type sans contact répondant notamment à la norme ISO/IEC 14443 ou 15693, dans la mesure où ces téléphones sont dépourvus d'interface sans contact en sortie d'usine.

L'invention vise également des dispositifs ayant une fonction NFC comme des téléphones portables, des tablettes électroniques, des ordinateurs pouvant comprendre les circuits de l'invention. L'invention concerne des produits équipés de la technologie NFC & sans-contact radiofréquence tels que les téléphones mobiles, des objets portables sans-contact tels que des montres, étiquettes d'identification radiofréquences RFID ou cartes à puce sans-contact ou hybrides (contact et sans contact.

### Art antérieur.

Des applications pour lecteur NFC et produits ou objets radiofréquences (RF ou NFC), alimentés par batterie, sont contraints par une consommation d'énergie définie et limitée du lecteur NFC; Les produits ou objets NFC doivent être quant à eux économiques à fabriquer.

Au cours des années, on a vu apparaître différentes techniques et procédés pour la détection de présence de transpondeurs radiofréquences qui tentent de répondre à ces deux préoccupations.

La technologie sans contact et NFC est apparue dans le monde de la téléphonie mobile et a crée de nouvelles contraintes. Le lecteur sans-contact intégré dans le téléphone mobile, alimenté par une batterie, est amené à réduire sa consommation d'énergie au cours notamment d'une phase initiale préalable de détection de présence de dispositif ou objet NFC (ou RF) avant d'initier une transaction radiofréquence.

Afin de réduire cette consommation d'énergie pendant la phase de scrutation (Polling) permettant d'identifier précisément la technologie de l'objet NFC présenté au face du dispositif, plusieurs méthodes ont été développées par les fabricants comme SONY, NXP, Samsung. Le principe de détection de carte (card detect) a été développé après coup par les fabricants pour pallier la consommation d'énergie de la phase de scrutation « polling ».

Ces méthodes sont basées sur la détection d'un couplage par induction entre le lecteur et le transpondeur RF. Pour simplifier, un lecteur RF tente de détecter l'influence du couplage par induction éventuel crée par l'antenne d'un autre transpondeur RF s'approchant de l'antenne du lecteur.

Cette technologie, déjà implantée dans de nombreux téléphones mobiles ou contrôleurs ou lecteurs NFC, est très efficace. Quand une carte RF ou un lecteur NFC ou n'importe quel produit NFC (ou RF) est amené à faible distance d'un téléphone NFC, un couplage par induction se produit et ce dernier est détecté par le lecteur NFC (ou RF). Ensuite, les modalités d'une phase de scrutation (Polling) commencent selon le standard NFC ou EMV ou autre norme. Ces phase permettent d'initier une transaction entre le lecteur RF (ou NFC) et le transpondeur RF (ou NFC).

### Problème technique.

Malheureusement, de nouvelles technologies sans-contact pourraient utiliser une antenne de très petites dimensions pour les transpondeurs RF (comme celle envisagée dans les cartes micro-SD). La taille de l'antenne pourrait être inférieure à 10 mm x 4 mm. De telles antennes seraient utilisées, par exemple, pour des appareils ou dispositifs portables tels que des bracelets, des montres NFC, etc.

En outre, de nouveaux dispositifs transpondeurs sans-contact, RF ou NFC alimentés par batterie, produisent en général un effet de charge plus réduit sur un lecteur radiofréquence (pour une détectabilité par le lecteur) comparativement à l'effet de charge produit par des transpondeurs (sans batterie) uniquement alimentés par champ radiofréquence du lecteur.

Par conséquent, comme l'antenne radiofréquence risque d'avoir une dimension très réduite, le couplage entre le transpondeur RF ou NFC et le lecteur risque d'être inexistant. Dans ce cas, les lecteurs RF ou NFC (comme les téléphones mobiles) qui mettent en oeuvre des méthodes de détection de transpondeur RF à faible puissance indiquées ci-dessus, risquent de ne pas du tout détecter les dispositifs RF ou NFC comme des montres NFC.

L'invention proposée permet notamment de résoudre ce problème. L'invention a pour objectif d'améliorer la communication radiofréquence entre un lecteur RF et des objets visés ci-dessus.

### Résumé de l'invention.

L'invention dans son principe principal consiste à émettre au moins une impulsion de champ électromagnétique ou un champ électromagnétique par le transpondeur RF lui-même pendant la phase de détection de transpondeur radiofréquence à proximité du lecteur ; Grâce à ce champ, l'invention peut simuler un couplage électromagnétique vu par le lecteur.

Ainsi, il est possible de ne pas modifier tout ou partie des lecteurs RF existants sur le marché.

A cet effet, l'invention a donc pour objet un procédé pour une détection de présence d'un transpondeur radiofréquence d'un objet par un lecteur radiofréquence, ledit procédé comprenant une étape préalable d'émission d'un champ électromagnétique par le lecteur et une étape de détection par le lecteur d'une valeur représentative de la présence à proximité du transpondeur.

Le procédé se distingue en ce qu'il comprend une étape d'émission d'un signal comprenant un champ électromagnétique, par ledit transpondeur radiofréquence, en réponse à ladite étape préalable d'émission d'un champ électromagnétique par le lecteur.

Selon d'autres caractéristiques du procédé :
- Il comprend une étape de détection d'une valeur représentative d'une variation de charge ou équivalent vu(e) par le lecteur ;
- La valeur représentative d'une variation de charge résulte d'une simulation de couplage par induction produite par le champ électromagnétique du transpondeur ;
- L'émission d'un champ d'indication de présence du transpondeur commence pendant l'émission du champ de détection du lecteur.

L'invention a également pour objet un procédé de communication radiofréquence de données entre un transpondeur sans-contact et un lecteur, ledit procédé mettant en oeuvre le procédé ci-dessus de détection de présence de transpondeur préalablement à ladite communication de données et/ou une étape de scrutation.

L'invention a également pour objet un système de communication radiofréquence correspondant au procédé. Le lecteur comprend des moyens d'émission préalable d'un signal comprenant un champ électromagnétique et des moyens de détection d'une valeur ou d'une variation représentative de la présence du transpondeur RF en réponse à ce champ électromagnétique ; Le transpondeur radiofréquence est configuré pour émettre un signal comprenant un champ électromagnétique en réponse à ladite étape préalable d'émission d'un champ électromagnétique par le lecteur.

L'invention a également pour objet un circuit transpondeur de communication RF, ledit circuit comprenant des moyens d'indication de présence pour établir une présence de transpondeur RF à proximité d'un lecteur RF, caractérisé en ce que ledit circuit est configuré pour générer un signal comprenant un champ électromagnétique en réponse à un signal de détection de présence reçu du lecteur RF.

Le circuit ci-dessus peut équiper, en étant fixé de manière soudée, collée ou amovible, tout objet radiofréquence portable ou non.

### Brève description des figures.

- La figure 1 illustre un système conforme à l'invention comprenant un objet sans contact en communication avec un terminal lecteur radiofréquence (RF) ;
- La figure 2 illustre une vue partielle d'un circuit radiofréquence 6 du lecteur RF comprenant des moyens de détection de présence 7 ;
- La figure 3 est un graphique illustrant des signaux de détection d'un lecteur RF selon un premier mode de détection et sans objet RF à proximité ;
- La figure 4 est un graphique illustrant deux premiers signaux TR1 de détection d'un lecteur RF en absence d'un objet RF (comme à la figure 3) et deux signaux TR2 du lecteur RF en présence d'un objet RF à proximité ;
- La figure 5 est un graphique illustrant des étapes d'interaction entre le lecteur RF et un transpondeur RF conforme à l'invention ;
- La figure 6 illustre les étapes du procédé de l'invention selon un mode préféré de mise en oeuvre.

### Description.

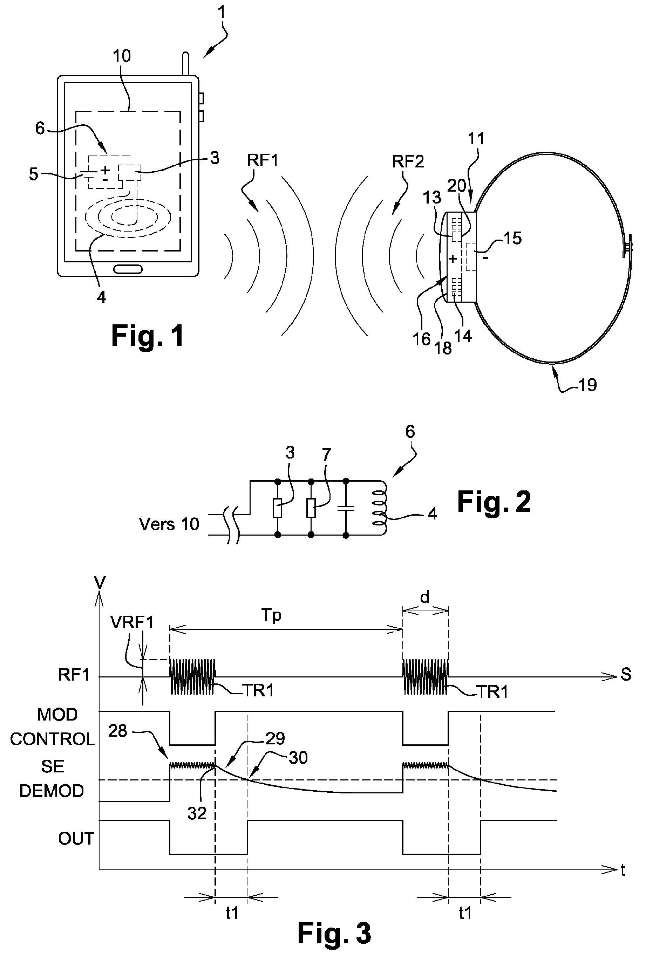

A la figure 1, l'invention concerne un système Z dans lequel la présence d'un transpondeur radiofréquence 11 est détectée par un lecteur radiofréquence 1.

Selon un mode de réalisation préféré du système Z, le lecteur 1 est ici un téléphone portable NFC mais pourrait représenter une tablette électronique NFC, un ordinateur portable NFC ou RF, tout lecteur sans-contact, notamment un objet portable sans-contact actif tel une montre capable d'émettre elle même un champ radiofréquence.
Le transpondeur radiofréquence 16 est quant à lui inclus ici dans un objet portable sans-contact tel qu'une montre 11.

Les rôles de chacun des objets (lecteur / montre) pourraient être inversés, le terminal ou lecteur 1 devenant un objet transpondeur radiofréquence 11 par exemple en mode émulation carte selon le standard ISO/IEC 18092 et la montre 11 devenant un lecteur actif (alimenté et émetteur de champ radiofréquence) pour lire le lecteur 11 en mode émulation carte ou équivalent.

Le lecteur 1 permet de lire notamment des transpondeurs radiofréquences passifs ou cartes sans-contact ou dispositifs RFID. Il comprend schématiquement (figure 1 et 2) des moyens 6 portés par un circuit imprimé 10 pour l'émission (de préférence en basse puissance) d'un signal RF1 comportant un champ électromagnétique de détection de présence préalable TR1, TR2. Cette capacité ainsi que les moyens de détection correspondants sont connus en soi, pour la plupart des lecteurs type NFC mettant en oeuvre une méthode de détection basse puissance. Ces moyens 6 comprennent un contrôleur NFC 4 relié à une antenne radiofréquence 4 et des moyens d'alimentation en énergie, comprenant ici une batterie 5.

Par basse puissance, on peut entendre une puissance du lecteur émise / consommée sur un laps de temps ; Par exemple, le lecteur radiofréquence peut émettre 100 micro seconde toutes les secondes ou 0,5 secondes.
La puissance consommée du lecteur par unité de temps (respectivement sur une durée d'une seconde ou demi-seconde) est par exemple inférieure à 10 ou 20 % par rapport à une consommation normale de lecteur pendant une transaction (bancaire, d'authentification...).

De manière connue, le lecteur 1 comprend également des moyens de détection 7 (illustrés schématiquement figure 2) pour détecter un ou mesurer une valeur ou une variation représentative de la présence du transpondeur RF à proximité du lecteur. Cette valeur se produit en réponse à ce champ électromagnétique RF1 qui constitue une étape préalable à une autre opération, notamment de scrutation ou de communication ou autre. Ce signal RF1 comprend par exemple une succession de trains d'ondes (ou impulsions de champ) radiofréquences émis périodiquement. Par exemple, le lecteur peut émettre des trains d'onde espacés ou intermittents de la fréquence porteuse du lecteur à une fréquence de 13,56 Mhz.

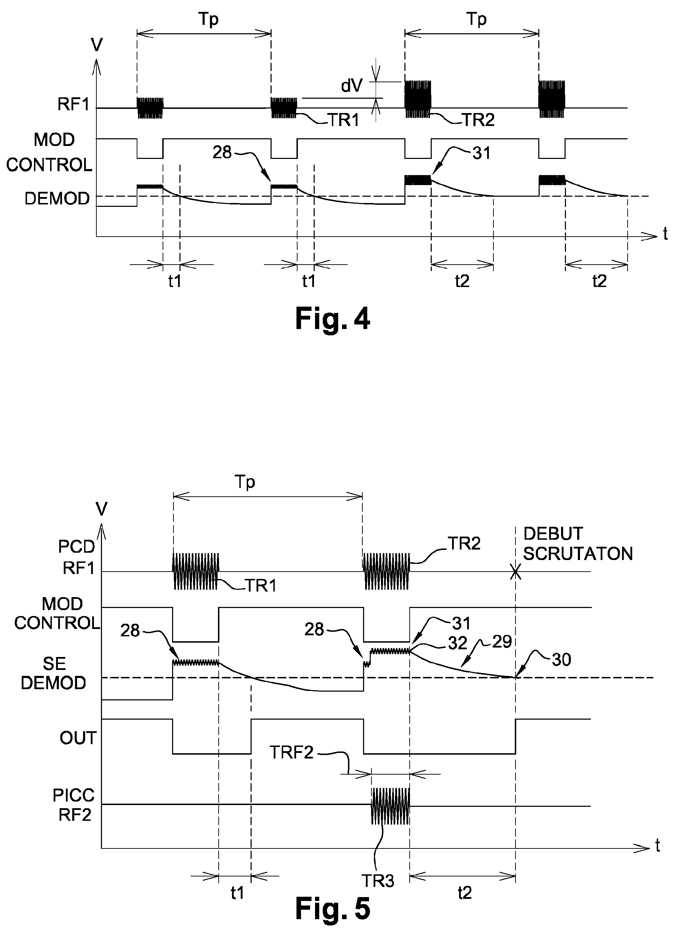

Différents principes ou méthodes de détection de transpondeurs RF à proximité (0 cm à quelques mètres), sont décrits ultérieurement en relation avec les figures 3 et 4.

La mise en oeuvre de ces méthodes de détection de présence peut constituer un préalable à toute communication du lecteur notamment celle requise du lecteur pour déterminer quel protocole adopter au cours des échanges de données subséquents.
Selon une caractéristique du mode préféré, le transpondeur radiofréquence 16 ou l'objet 11 du système Z est configuré pour émettre activement (avec sa source d'énergie propre) un champ électromagnétique RF2 en réponse à ladite émission préalable RF1 du lecteur. Le champ RF2 peut être émis qu'en réponse à une détection de champs ou alternativement qu'à des intervalles de temps réguliers ou selon les deux derniers modes précités ensemble.

Alternativement, l'émission d'un champ de signalisation de présence par le transpondeur est déclenchée par une simple induction détectée dans l'objet et provoquée par le champ du lecteur. Cette simple induction peut déclencher l'émission du champ par le transpondeur via un circuit logique.

A cet effet, l'objet transpondeur 11 comprend un circuit transpondeur 16 de communication RF ; Ce circuit 16 comprend selon une caractéristique, des moyens actifs d'indication de présence pour établir une présence auprès d'un lecteur RF. Ces moyens actifs peuvent comprendre une puce NFC active 13 disposant d'une source d'énergie propre 15 (pile, batterie) pour générer un champ électromagnétique propre à l'aide d'une antenne RF 14 et le cas échéant, avec un programme de gestion ou de déclenchement du signal RF2. L'ensemble peut être porté par un circuit imprimé 20.

Ainsi, l'invention prévoit de modifier uniquement les transpondeurs RF passifs (généralement utilisés en relation avec ce type de lecteur RF à détection de présence de transpondeurs, notamment à basse énergie) en les rendant actifs.

Selon une caractéristique de ce mode préféré, le circuit 13 de l'objet 11 est configuré pour générer un champ électromagnétique en réponse à un signal RF1 de détection de présence reçu du lecteur et selon des moyens de déclenchement pouvant comprendre une logique cablée (sur circuit câblé) et/ou un programme d'indication de présence (programme équivalent à une fonction ou des étapes implémentée(s) en logique cablée ci-dessus) pour détecter un signal de détection de présence du lecteur.

Une génération de champ d'indication de présence peut être déclenchée par des moyens de déclenchement pouvant comprendre un programme P1 d'indication de présence, contenu notamment au sein d'un puce NFC 13 de l'objet 11. Ce programme P1 permet des opérations (comparaison, calcul...) permettant de déterminer un signal RF1 de détection de présence du lecteur. Ce programme peut, par exemple, mesurer les caractéristiques (périodes, amplitudes, fréquence, longueur) du signal RF1 du lecteur. Ce programme peut piloter la puce NFC 13 pour émettre un signal RF2 d'indication de présence sous forme de champ électromagnétique propre. Le cas échéant, le programme P1 peut piloter la puce NFC pour renouveler ou émettre (plus fort ou différemment que le signal TR3 précédent), un autre signal d'indication de présence à destination du lecteur.

Ainsi, l'objet 11 détecte le train d'onde intermittent RF1 du lecteur 1. La détection peut être basée sur une simple induction produite par le lecteur sur l'objet et détectée par lui. La détection peut être assortie d'une détection ou mesure d'une caractéristique du signal RF1 du lecteur ; Par exemple, le transpondeur mesure un intervalle de temps entre deux inductions qu'il détecte sur son antenne 14 et correspondant à un intervalle de temps séparant deux trains d'onde successif TR1, TR2 du lecteur.

Comme l'objet RF est très petit (dans le mode préféré), un couplage du lecteur avec le transpondeur RF 11 peut ne pas être détecté par le lecteur ou détecté difficilement selon les méthodes classiques visées précédemment et illustrées aux figures 3 et 4.

Afin d'être quand même détecté par le lecteur selon les méthodes classiques et de préférence sans modification du lecteur, l'objet transpondeur 11 produit lui-même activement un champ électromagnétique en réponse à la détection du signal intermittent du lecteur notamment grâce à l'incorporation du circuit 16 (13, 14, 15, 20) d'indication de présence.

Ainsi selon une caractéristique de ce mode préféré, le circuit transpondeur 16 de l'objet comprend une source d'énergie 15 pour émettre activement son propre signal RF2 comprenant au moins la génération d'un champ électromagnétique propre.

Le circuit 16 ci-dessus notamment avec un contrôleur NFC 13, peut être fixé dans l'objet portable radiofréquence de manière soudée, collée ou amovible. Par exemple, le circuit 16 peut être dans une carte d'identification (SIM) amovible ou module électronique NFC soudée sur un circuit imprimé de l'objet. Ce circuit peut être relié au contrôleur principal de l'objet. Le cas échéant, ce circuit est compris dans le contrôleur principal de l'objet.

Le module NFC avec le circuit 16 peut résider notamment au sein d'un module de communication de type M2M (Machine to Machine) pour faciliter sa détection et communication.

### Le procédé de l'invention selon un mode préféré va maintenant être décrit.

Les inventeurs ont observés dans leur réflexion que la technologie actuelle ISO/IEC 14443 et NFC acronyme de Near Field Communication (communication radiofréquence de proximité) est basée sur un principe de rétro modulation d'un signal émis par un lecteur.

Selon ce principe, une certaine quantité de champ électromagnétique fournie par un lecteur, doit être modulée par l'objet à puce sans-contact de proximité également appelé PICC (acronyme anglais de Proximity Integrated Circuit Card).

Afin d'être conforme à la sensibilité du lecteur, une amplitude minimale de champ est requise pour être modulée par l'objet. Cette modulation de la porteuse de lecteur doit générer deux bandes latérales avec une amplitude au moins égale à 22/H^{0,5}. Pour remplir cette condition, il est nécessaire d'avoir un minimum de couplage entre le lecteur et l'objet pour générer suffisamment de signal de rétro-modulation. Le facteur de couplage est directement dépendant des surfaces de l'antenne du lecteur et de celle de l'objet sans contact.

Dans le cas de très petit objet sans-contact, par exemple, une carte micro SD ou objet de surface sensiblement équivalente, la surface de l'antenne radiofréquence est radicalement trop petite. En outre, ce genre d'objet est destiné à être incorporé dans un dispositif hôte tel une montre. Cette dernière opération réduit encore plus le couplage de l'objet sans-contact avec le lecteur à cause de l'environnement métallique du dispositif hôte (boîtier de montre).

En particulier, une communication utilisée entre une carte sans contact appelée PICC et un lecteur sans-contact appelé PCD (Acronyme anglais de Proximity Coupling Device) est basé sur le principe d'une modulation de l'amplitude du champ magnétique généré par le PCD. Ce dernier détecte en retour les variations de cette amplitude et en décode le message produit par le PICC.

La manière de qualifier la capacité d'un transpondeur radiofréquence PICC à répondre à un lecteur PCD s'appuie sur une scrutation par le PCD du champ ainsi modulé par le transpondeur radiofréquence.

Dans les communications des transpondeurs sans contact de proximité, la fréquence de la porteuse appelée est normalisée. Sa valeur est de 13,56 MHz.

La distance de communication de ce type de transpondeur est un critère important pour certaines applications. Une distance acceptable peut être très difficile voire impossible à atteindre dans les cas ou la surface de l'antenne est faible. La taille de l'antenne du transpondeur est en effet un élément clé des distances de communication des lecteurs PCD vers les objets PICC.

C'est le cas bien connu de certains téléphones dits" NFC", mais plus encore lorsque le transpondeur et son antenne doivent être intégrés dans un objet très petit tel qu'une carte mémoire de type micro-SD, une montre. Dans ce type d'objet, la taille de l'antenne ne permet pas une communication passive entre le transpondeur et le lecteur sans contact.

Dans ce type de produit très petit, l'usage d'une modulation activée utilisant une source d'alimentation locale (par rapport à l'objet) permet d'obtenir une distance de communication parfois acceptable malgré le format très petit.

Les demandes de brevet de la déposante EP 11305453.0 et EP 11305454.8 et EP 2535838 sont incorporées ici notamment en ce qui concerne la description des modes de réalisation d'objets ou dispositifs à communication activée ou à modulation négative.

Aux figures 3, 4, est illustré le principe général de détection de transpondeurs RF, notamment à très faible puissance, par un lecteur RF. Il met en oeuvre une génération périodique d'impulsions RF1 à la fréquence porteuse (13,56 MHZ) à partir du lecteur 1 (PCD) comme expliqué ci-après.

Le lecteur 1 (fig. 3) génère périodiquement un signal RF1 (illustré par deux trains d'ondes sur la figure) avec une période Tp et une amplitude de VRF1. La durée de l'impulsion peut être égale à « d ». La tension (ou amplitude) de l'impulsion VRF1 est déterminée comme étant un compromis : Elle est aussi petite que possible pour réduire le besoin de puissance mais quand même assez grande pour détecter la présence d'un transpondeur RF d'assez loin.

Le second signal « MOD CONTROL », sur le graphique de la figure 3, illustre un signal de contrôle de la modulation du lecteur 1. Le troisième signal (DEMOD) sur le graphique illustre un signal de démodulation du lecteur 1 qui correspond au signal analogique RF1. Le signal DEMOD comprend une phase de décroissance 29 après un niveau haut 28. Le lecteur mesure pour deux trains d'onde successifs, le temps de décroissance t1, t2 du signal DEMOD entre deux niveaux 28 et 30 correspondant respectivement à la fin du train d'onde TR1 et le croisement de la courbe décroissante 29 avec un seuil « SE ».

Il existe plusieurs méthodes dans l'art antérieur pour détecter la présence d'un objet radiofréquence tel une carte RF passive (qui est alimentée par le champ électromagnétique d'un lecteur RF). La première méthode plus courante (fig. 4) est basée sur la détection d'une variation dVRF1 de la tension VRF1 entre deux impulsions TR1, TR2 consécutives produite par un lecteur RF. La variation de tension dVRF1 (fig. 4) correspond à l'impact que procure le couplage de l'antenne 4 du lecteur RF 1 avec une autre antenne 14 s'approchant à proximité de l'antenne 4 du lecteur RF 1.

Les différences de tension entre les impulsions (ici dVRF1) sont détectées par le lecteur 1 et sont interprétées notamment grâce à un programme P1, comme une présence d'un transpondeur radiofréquence 16 à portée du lecteur. Ainsi, comme illustré sur les figures 3 et 4, les deux premiers trains d'ondes sont produits sans présence d'objet RF à proximité du lecteur. Par contre, à la figure 4, les troisième et quatrième trains d'onde sont produits par le lecteur avec présence d'objet RF à proximité.

Cette présence étant détectée par le lecteur, ce dernier commence ensuite la phase de scrutation (polling) par exemple tel que décrit par le standard ou norme sélectionnée (EMV, NFC standard, ISO/IEC 14443 ou ISO/IEC 15693 ou tout autre illustré ultérieurement à la figure 5). Une phase de scrutation NFC est une procédure effectuée ponctuellement ou périodiquement par un lecteur ou un coupleur sans contact permettant d'identifier tout ou partie des transpondeurs sans contact présentés dans son champ magnétique induit. L'opération de scrutation permet notamment d'identifier précisément la technologie du ou des transpondeurs (ISO 14443, ISO 15693, JIS X6319, etc...) de manière à amorcer dans un second temps une phase de communication avec ce ou ces derniers.

A la figure 4 est illustrée une seconde méthode de détection de présence de transpondeur RF ; Elle se fonde sur une mesure du temps de décroissance de la tension de l'impulsion (t - t1). En effet, la durée de décroissance de la tension de l'impulsion après son interruption est plus ou moins longue entre deux impulsions consécutives TR1, TR2 selon le couplage créé par la présence d'un transpondeur RF. L'analyse de l'écart (t2 - t1) ou à la limite simplement une mesure du temps t2 ou t1 permet de conclure à la présence ou non d'un transpondeur dans le champ du lecteur que la valeur de l'écart soit positive ou négative.

Le problème de l'invention se produit notamment lorsque le transpondeur RF a un facteur de couplage très petit. Cela signifie que l'antenne du lecteur et l'antenne de la carte ont un très mauvais et petit facteur de couplage (K).

C'est principalement en raison de la dimension de l'antenne du transpondeur comme indiqué précédemment. La technologie sans-contact active permet maintenant d'avoir une antenne avec un facteur de forme de très petit format. Une diminution de la dimension de l'antenne peut être très importante du fait du recours à la technologie sans-contact active.

Par exemple, dans une carte micro SD sans contact utilisant la technologie active, la surface de l'antenne peut être de 30 mm2. Dans l'industrie des objets portables, la surface actuelle de l'antenne est de l'ordre de 50 mm2.

Une nouvelle génération de téléphone ou de montre sans contact NFC peut envisager d'utiliser cette technologie de communication active. En raison de la dimension très réduite de l'antenne, ces objets ne seront pas détectés via les méthodes à faible puissance décrite précédemment, de détection de présence de transpondeur RF. La taille de l'antenne dans des objets sans-contact passifs a généralement été plus de 900 mm2. Le facteur K est réduit d'environ 30 fois pour les objets radiofréquence visés principalement par l'invention par rapport à des objets RF passifs (qui requièrent l'énergie du champ électromagnétique du lecteur pour moduler une fréquence porteuse).

A la figure 5, l'invention permet de résoudre ce problème grâce au recours d'objets sans-contact actifs, notamment à antenne réduite ou non. Le graphique illustre différentes interactions entre le lecteur 1 et le transpondeur RF. Il illustre notamment un premier signal PCD RF1 (avec TR1), de détection émis le lecteur RF en absence d'un objet RF. L'impulsion TR1 est suivie d'une seconde impulsion cette fois en présence d'un objet RF à proximité. Ensuite, on observe le signal de l'objet PICC RF2 (avec TR3) et l'interaction 30, 31 (ici en tension) produite sur le lecteur comme illustré précédemment.

En absence d'objet RF, le premier train d'onde TR1 est accompagné des signaux MOD, DEMOD et OUT comme précédemment aux figures 3 et 4. En présence d'objet RF à proximité du lecteur, le second train d'onde TR2 est capté par l'objet 11. En réponse, l'objet 11 émet immédiatement lui-même avec son énergie un signal PICC RF2 comprenant un champ électromagnétique ou un train d'onde radiofréquence TR3.

Ce train d'onde TR3 de l'objet provoque une élévation du niveau de tension « V » du niveau 28 au niveau 31 sur le signal DEMOD perçu par le lecteur notamment dans son étage de démodulation.

Cette élévation dVRF1 peut être détectée par le lecteur pour conclure à la présence d'un objet RF et pour initier une action quelconque notamment de préférence une phase de scrutation (polling).

Alternativement, le lecteur peut détecter une valeur correspond à une variation de temps dt2 - t1 entre un point 32 initiant une décroissance du niveau de tension 31 et un point 30 de croisement par la décroissance 29 au seuil de tension plus bas SE.

Cette valeur de variation de temps dt2-t1 peut être mesurée à l'aide des fronts montants ou descendants des signaux logiques MOD et des signaux de sortie logique OUT d'un démodulateur et qui correspondent aux signaux DEMOD analogiques.

Cette valeur dt2-t1 peut être comparée en suivant notamment le programme P1 à une valeur stockée en mémoire du lecteur. Si elle correspond à celle stockée, le lecteur en déduit une présence d'objet 11 et procède alors immédiatement à la phase de scrutation classique ou toute autre opération notamment de contrôle, ou directement à un échange de données si le protocole d'échange de données du transpondeur est connu.

Alternativement, d'un point de vue implémentation, on préfère comparer le niveau N avec le niveau N-1 plutôt qu'une valeur mémorisée en production. Par exemple, si l'utilisateur pose son téléphone sur une surface métallique (cela engendre une modification de la valeur d'impédance de l'antenne et une modification du signal mesuré), cette variation va provoquer une phase de scrutation qui ne va pas aboutir. Dans le cas où on compare ce niveau/temps avec une valeur préprogrammée, le dispositif NFC risque d'effectuer en boucle des opérations de scrutation. Alors que si on compare ce niveau/temps avec la valeur précédente, le dispositif NFC stoppe alors l'opération de scrutation jusqu'à détecter un nouveau changement de valeur.

Ainsi, l'invention propose notamment le recours à des technologies sans-contact actives développées pour des petits objets. Toutefois, l'invention prend plus de sens et d'intérêt à priori pour les objets à antenne réduite mettant en oeuvre une technologie sans-contact active. Toutefois, elle peut concerner des objets avec des antennes de plus grandes dimensions que 900 mm2.

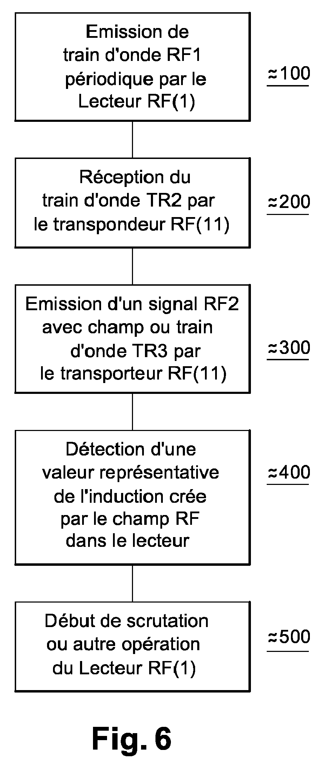

Les étapes du procédé selon un mode préféré sont illustrées à la figure 6 en relation avec les graphiques des figures 3-5.

A l'étape 100, le lecteur 1 procède à l'émission d'un signal RF1 périodique comprenant train d'onde TR1, TR2 de période Tp, d'une amplitude ou niveau VRF1 et de longueur « d ».

A l'étape 200, l'objet RF actif (PICC) (notamment à petite antenne), situé à proximité du lecteur, par exemple 1 cm à 1 m, reçoit et détecte ou discrimine une impulsion ou train d'onde TR2 du signal RF1 du lecteur.

A l'étape 300, l'objet 11 envoie immédiatement en retour (par moyens de déclenchement passifs ou via un programme P1) un signal RF2 comprenant un champ électromagnétique ou train d'onde TR3, notamment avec sa propre fréquence porteuse ou toute autre fréquence, pendant un temps tRF2.

A cet effet, l'objet 11 comporte un programme P1 dans un de ses contrôleurs (ou son contrôleur 13) permettant de mettre de détecter et d'émettre une réponse active TR3 dès la détection du signal notamment basse énergie RF1 du lecteur.

Le programme P1 de l'objet 11 peut prévoir à une étape 350 (non représentée), une émission plus forte ou répétée du signal TR3 par l'objet en cas d'absence de signal de scrutation attendu du lecteur au terme d'un certain laps de temps prédéterminé.

A l'étape 400, le champ électromagnétique RF3 du transpondeur actif est détecté par le lecteur RF comme si c'était un couplage avec un transpondeur quelconque (passif ou actif). En effet, le champ du transpondeur RF peut induire un courant ou tension dans l'antenne du lecteur et un circuit 7 de détection de couplage du lecteur le détecte. Le circuit 7 de détection de couplage du lecteur détecte une valeur dVRF1 ou dt2-t1 représentative de la variation induite par le champ du transpondeur RF comme si c'était une variation produite par un couplage. Un couplage électromagnétique modifie généralement la charge (ou impédance) vue par le lecteur et crée une variation de courant dans l'antenne du lecteur.
On peut aussi mesurer une variation de tension « V » ou d'intensité induite dans l'antenne 4 du lecteur 1 par le champ TR3 du transpondeur 16.

Ainsi, on constate que la détection est indépendante de la phase des signaux RF2.

A l'étape 500, le lecteur 1 détecte le signal RF2 avec le train d'onde TR3 de l'objet, lui signalant sa présence à proximité ; Le lecteur entame alors une action quelconque et notamment de préférence une phase de scrutation classique. Cette phase de scrutation peut se faire de préférence à un niveau bas d'énergie (mais aussi à un niveau plus élevé). Le lecteur 1 peut communiquer ensuite des données avec le transpondeur RF après scrutation et/ou détermination du protocole ou technologie RF à mettre en oeuvre.

La scrutation classique s'effectue avantageusement sans qu'il y ait eu une quelconque modification logicielle ou matérielle du lecteur. Seul le transpondeur de l'objet 11 est modifié.

Le procédé comprend donc une étape consistant à équiper un objet ou dispositif RF de moyens d'émission propre actifs 13, 14, 15 permettant de générer un champ électromagnétique et des moyens logiciel P1 (ou équivalent) pour piloter ou déclencher l'émission de ce champ, le cas échéant en réponse à une détection d'un signal, notamment basse énergie d'un lecteur RF.

L'invention fonctionne quelle que soit la méthode de détection à faible puissance utilisée par le lecteur.

Tout objet portable sans contact, montre, micro SD et tout autre dispositif actif peut être détecté parfaitement par des téléphones et lecteurs NFC mettant en oeuvre le procédé de l'invention de détection de présence, de transpondeurs radiofréquences.

## Revendications

1. Procédé pour une détection de présence d'un transpondeur radiofréquence (16) d'un objet (11) par un lecteur radiofréquence (1), ledit procédé comprenant une étape (100) d'émission d'un signal (RF1) comprenant un champ électromagnétique (RF1), par le lecteur (1) et une étape de détection (400) par le lecteur d'une valeur représentative (dt2-T1, dVRF1) de la présence du transpondeur (11) en réponse à ce champ (TR2),
**caractérisé en ce qu'**il comprend une étape d'émission d'un signal (RF2) comprenant un champ électromagnétique (TR3) par ledit transpondeur radiofréquence (16) en réponse à ladite émission préalable (RF1).

2. Procédé selon la revendication précédente, **caractérisé en ce qu'**il comprend une étape de détection d'une valeur (dt2-T1, dVRF1) représentative d'une variation de charge ou équivalent vu(e) par le lecteur 11.

3. Procédé selon l'une quelconque des revendications précédentes, **caractérisé en ce qu'**il comprend une étape de détection d'une variation de tension ou d'intensité induite dans l'antenne (4) du lecteur (1) par le champ (TR3) du transpondeur (16).

4. Procédé selon l'une quelconque des revendications précédentes, **caractérisé en ce que** ladite valeur (dt2-T1, dVRF1) représentative d'une variation de charge résulte d'une simulation produite par le champ du transpondeur.

5. Procédé selon l'une quelconque des revendications précédentes, **caractérisé en ce que** l'émission de champ (TR3) du transpondeur commence pendant l'émission de champ (TR2) du lecteur.

6. Procédé de communication radiofréquence de données entre un transpondeur sans-contact (16) d'un objet (11) et un lecteur (1), ledit procédé mettant en oeuvre un procédé de détection de présence de transpondeur préalablement à une communication de données et/ou une étape de scrutation,
**caractérisé en ce que** ledit procédé de détection de présence est conforme à l'une des revendications 1 à 5.

7. Système pour détecter la présence d'un transpondeur radiofréquence (16) par un lecteur radiofréquence (1), ledit lecteur (1) comprenant des moyens d'émission (6) préalable d'un signal (RF1) comprenant un champ électromagnétique (TR1), et des moyens de détection (7) d'une valeur (dt2-T1, dVRF1) ou variation représentative de la présence du transpondeur RF en réponse à ce champ électromagnétique (TR1),
**caractérisé en ce qu'**il ledit transpondeur radiofréquence 11 est configuré pour émettre un signal RF2 comprenant un champ électromagnétique TR3 en réponse à ladite émission préalable RF1 de signal du lecteur.

8. Circuit transpondeur (16, 20) de communication (RF) pour objet radiofréquence (11), ledit circuit comprenant des moyens 13, 14, 15 d'indication de présence pour établir une présence à proximité d'un lecteur RF,
**caractérisé en ce que** ledit circuit est configuré pour générer un signal (RF2) comprenant un champ électromagnétique (TR3) en réponse à un signal (RF1) de détection de présence reçu du lecteur.

9. Circuit transpondeur (16, 20) selon la revendication précédente, **caractérisé en ce qu'**il comprend une source d'énergie 15 pour émettre activement son propre champ électromagnétique (TR3), un programme d'indication de présence (P1) ou moyens déclencheur pour détecter le signal (RF1) du lecteur et pour déclencher en retour, une génération d'un signal (RF2) d'indication de présence comprenant un champ électromagnétique (TR3).

10. Objet portable radiofréquence (11) comprenant le circuit transpondeur (16, 20) selon l'une des revendications 8 à 9, ledit circuit étant fixé de manière soudée, collée ou amovible.
